# EUROPEAN PATENT SPECIFICATION

(11) **EP 4 319 097 B1**
(45) Date of publication and mention of the grant of the patent: **31.12.2025**
(21) Application number: 22803829.5
(22) Date of filing: 10.05.2022
(51) Int. Cl.: H04L 61/251, H04L 61/2514, H04L 61/10, H04W 76/10

(54) **COMMUNICATION METHOD, APPARATUS, COMPUTER-READABLE MEDIUM ELECTRONIC DEVICE, AND PROGRAM PRODUCT**
KOMMUNIKATIONSVERFAHREN, VORRICHTUNG, ELEKTRONISCHE VORRICHTUNG MIT COMPUTERLESBAREM MEDIUM UND PROGRAMMPRODUKT
PROCÉDÉ DE COMMUNICATION, APPAREIL, DISPOSITIF ÉLECTRONIQUE À SUPPORT LISIBLE PAR ORDINATEUR ET PRODUIT-PROGRAMME

(30) Priority: 21.05.2021 CN 202110557193
(43) Date of publication of application: 07.02.2024
(73) Proprietor: Tencent Technology (Shenzhen) Company Limited, Shenzhen, Guangdong, 518057 (CN)
(72) Inventor: HE, Rugen, Shenzhen, Guangdong 518057 (CN)
(74) Representative: Novagraaf International SA
(86) International application number: PCT/CN2022/091981
(87) International publication number: WO 2022/242507

(56) References cited:
- WO-A1-2020/199896
- CN-A- 108 738 077
- CN-A- 111 385 369
- CN-A- 111 757 389
- CN-A- 112 055 035
- CN-A- 113 347 738
- US-A1- 2019 058 741

## Description

This application claims priority to Chinese Patent Application No. 202110557193.0, entitled "METHOD AND APPARATUS FOR COMMUNICATION, COMPUTER-READABLE MEDIUM, AND ELECTRONIC DEVICE" and filed with the China National Intellectual Property Administration on May 21, 2021.

### FIELD OF THE TECHNOLOGY

The present disclosure relates to the field of computer and communication technology, and specifically, to a method and an apparatus for communication, a computer-readable medium, an electronic device, and a program product.

### BACKGROUND OF THE DISCLOSURE

In conventional technology, deploying a core network for a 5G private network of an enterprise at a local equipment room does not concern an operation such as network address translation (NAT), because the interconnection is via a local area network. Hence, information exchanged among elements in the core network would not be exposed to a public network, and there is no security risk.

Deploying the elements in the core network of the 5G private network at a cloud introduces a problem of the NAT for a stream control transmission protocol (SCTP) connection between a base station and an access and mobility management function (AMF) which is deployed at the cloud and a problem on message security during transmission, both of which are urgent technical problems to be resolved.

Document CN 112055035 A discloses a method and a device for establishing an NG interface, which relate to the technical field of communication, and the method comprises the following steps: an access and mobility management function (AMF) device sends an AMF configuration update message to a base station gNB, wherein a control plane transport layer information element of the AMF configuration update message at least comprises a Transport Network Layer (TNL) protocol type, a transport network layer port and an Internet Protocol (IP) address; and the AMF receives an AMF configuration update response message sent by the gNB, wherein the AMF configuration update response message is obtained by the gNB after the operation of the TNL link based on the AMF configuration update message.

### SUMMARY

A method and an apparatus for communication, a computer-readable medium, and a program product are provided according to embodiments of the present disclosure. Thereby, a networking mode between a base-station device and an access and mobility management function (AMF) is optimized, flexibility of AMF deployment is achieved while ensuring communication security between the AMF and the base-station device, and the AMF has stronger capability of processing services.

Other features and advantages of the present disclosure would become apparent through following detailed description, or may be partially learned through practicing embodiments of the present disclosure.

In an aspect, a method for communication is provided according to an embodiment of the present disclosure. The method is executable by a stream control transmission protocol (SCTP) proxy gateway, and comprises: establishing a connection under an SCTP with a base-station device in response to an SCTP-connection request transmitted by the base-station device; receiving a request, which is for establishing a service and which is transmitted by the base-station device through the connection, and encapsulating request data comprised in the request for establishing the service as a request message, after establishing the connection with the base-station device; determining an AMF network address through parsing a preconfigured AMF domain name; transmitting the request message to a target AMF corresponding to the AMF network address; encapsulating a responding message, which is returned by the target AMF for the request message, through the SCTP to obtain a response; and transmitting the response to the base-station device.

In another aspect, a method for communication is provided according to an embodiment of the present disclosure. The method is executable by a base-station device, and comprises: transmitting an SCTP-connection request to an SCTP proxy gateway to establish a connection under an SCTP with the SCTP proxy gateway; transmitting a request for establishing a service to the SCTP proxy gateway through the connection, after establishing the connection with the SCTP proxy gateway, to enable the SCTP proxy gateway to encapsulate request data comprised in the request for establishing the service as a request message and transmit the request message to a target AMF, where the SCTP proxy gateway determines the target AMF through parsing a preconfigured AMF domain name; and receiving a response, which is returned by the SCTP proxy gateway through the connection, where the SCTP proxy gateway obtains the response through encapsulating a responding message, which is returned by the target AMF for the request message, through the SCTP.

In another aspect, a method for communication is provided according to an embodiment of the present disclosure. The method is executable by a domain-name-system (DNS) load balancing gateway, and comprises: receiving a DNS query request, which is transmitted by an SCTP proxy gateway for a preconfigured AMF domain name; allocating an AMF network address corresponding to the AMF domain name in response to the DNS query request; generating a DNS query response indicating the AMF network address; and transmitting the DNS query response to the SCTP proxy gateway, to enable the SCTP proxy gateway to encapsulate request data comprised in a request, which is for establishing a service and transmitted by a base-station device through a connection under an SCTP, as a request message and transmit the request message to a target AMF corresponding to the AMF network address.

In another aspect, an apparatus for communication is provided. The apparatus is deployed on an SCTP proxy gateway, and comprises: a first establishing unit, configured to establish a connection under an SCTP with a base-station device in response to an SCTP-connection request transmitted by the base-station device; a first receiving unit, configured to receive a request, which is for establishing a service and which is transmitted by the base-station device through the connection, and encapsulate request data comprised in the request for establishing the service as a request message, after the connection is established with the base-station device; a processing unit, configured to determine an AMF network address through parsing a preconfigured AMF domain name, and transmit the request message to a target AMF corresponding to the AMF network address; and a first transmitting unit, configured to encapsulate a responding message, which is returned by the target AMF for the request message, through the SCTP to obtain a response, and transmit the response to the base-station device.

In another aspect, an apparatus for communication is provided. The apparatus is deployed on a base-station device, and comprises: a second establishing unit, configured to transmit an SCTP-connection request to an SCTP proxy gateway to establish a connection under an SCTP with the SCTP proxy gateway; a second transmitting unit, configured to transmit a request for establishing a service to the SCTP proxy gateway through the connection, after the connection is established with the SCTP proxy gateway, to enable the SCTP proxy gateway to encapsulate request data comprised in the request for establishing the service as a request message and transmit the request message to a target AMF, where the SCTP proxy gateway determines the target AMF through parsing a preconfigured AMF domain name; and a second receiving unit, configured to receive a response, which is returned by the SCTP proxy gateway through the connection, where the SCTP proxy gateway obtains the response through encapsulating a responding message, which is returned by the target AMF for the request message, through the SCTP.

In another aspect, an apparatus for communication is provided. The apparatus is deployed on a DNS load balancing gateway, and comprises: a third receiving unit, configured to receive a DNS query request, which is transmitted by an SCTP proxy gateway for a preconfigured AMF domain name; an allocating unit, configured allocate an AMF network address corresponding to the AMF domain name in response to the DNS query request; and a third transmitting unit, configured to generate a DNS query response indicating the AMF network address, and transmit the DNS query response to the SCTP proxy gateway, to enable the SCTP proxy gateway to encapsulate request data comprised in a request, which is for establishing a service and transmitted by a base-station device through a connection under an SCTP, as a request message and transmit the request message to a target AMF corresponding to the AMF network address.

In another aspect, a computer-readable medium is provided according to an embodiment of the present disclosure. The computer-readable medium stores a computer program, and the computer program when executed by a processor implements the method according to any foregoing embodiment.

In another aspect, a computer program product or a computer program is provided according to an embodiment of the present disclosure. The computer program product or the computer program comprises computer instructions which are stored in a computer-readable storage medium, and a processor of a computer device reads the computer instructions from the computer-readable storage medium and executes the computer instructions to cause the computer device to perform the method according to any foregoing embodiment.

Technical solutions are provided according to some embodiments of the present disclosure. After establishing the connection under the SCP with the base-station device, the SCTP proxy gateway receives the request for establishing the service, which is transmitted by the base-station device through the connection, and encapsulates the request data comprised in the request as the request message. Then, the SCTP proxy gateway determines the corresponding AMF network address through parsing the preconfigured AMF domain name, and transmits the request message to the target AMF corresponding to the AMF network address. The SCTP proxy gateway further encapsulates the responding message, which is returned by the target AMF for the request message, through the SCTP, and transmits the response to the base-station device. Thereby, the technical solutions optimize a networking mode between the base-station device and the AMF by utilizing the SCTP proxy gateway. The AMF is flexibly deployed while ensuring communication security between the AMF and the base-station device, and is reasonably allocated through searching for the AMF network address according to the AMF domain name. The AMF have an improved capability of processing services. In addition, it is not necessary to deploy additional devices in a cloud at which the AMF is located, which reduces a cost of remote deployment.

The foregoing general description and following detailed description are merely illustrative and exemplary, and are not intended for limiting the present disclosure.

### BRIEF DESCRIPTION OF THE DRAWINGS

Herein the drawings are incorporated into the specification, constitute a part of the specification, show embodiments of the present disclosure, and are intended for explaining a principle of the present disclosure along with the specification. Apparently, the following drawings show merely a part of embodiments of the present disclosure, and those skilled in the art may derive other drawings based on these drawings without a creative effort.
Figure 1 is a schematic architectural diagram of keys network elements of a 5G network.
Figure 2 is a schematic diagram of information transmission implemented through an encapsulated Internet Protocol Security (IPsec) tunnel between a base station and an access and mobility management function (AMF).
Figure 3 is a schematic diagram of information transmission implemented through adding a stream control transmission protocol (SCTP) proxy gateway between a base station and an AMF according to an embodiment of the present disclosure.
Figure 4 is a flowchart of a method for communication according to an embodiment of the present disclosure.
Figure 5 is a flowchart of a method for communication according to another embodiment of the present disclosure.
Figure 6 is a flowchart of a method for communication according to another embodiment of the present disclosure.
Figure 7 is a flowchart of a method for communication according to another embodiment of the present disclosure.
Figure 8 is a block diagram of an apparatus for communication according to an embodiment of the present disclosure.
Figure 9 is a block diagram of an apparatus for communication according to another embodiment of the present disclosure.
Figure 10 is a block diagram of an apparatus for communication according to another embodiment of the present disclosure.
Figure 11 is a schematic structural diagram of a computer system of an electronic device configured to implement an embodiment of the present disclosure.

### DESCRIPTION OF EMBODIMENTS

Exemplary implementations are now described more comprehensively with reference to the drawings. Embodiments may be implemented in various forms, and should not be construed as being limited to examples described herein. Rather, these examples render the present disclosure more comprehensive and complete, and convey a concept of embodiments thoroughly to those skilled in the art.

In addition, features, structures, or characteristics that are described may be combined in one or more embodiments in any appropriate manner. Following description provide more specific details to facilitate comprehensive understanding of embodiments of the present disclosure. Those skilled in the art will be aware that technical solutions in the present disclosure may be implemented without one or more specific details, or with another method, unit, apparatus, system, or step. In other cases, conventional methods, apparatuses, systems, implementations, or operations are not shown or described in detail to avoid obscuring aspects of the present disclosure.

The block diagrams as shown in the drawings are merely functional entities and do not necessarily correspond to physically independent entities. That is, the functional entities may be implemented as software, or in at least one hardware module or integrated circuit, or in different networks and/or processor apparatuses and/or microcontroller apparatuses.

The flowcharts as shown in the drawings are merely exemplary description, do not necessarily comprise all content and operations/steps, and do not necessarily be performed in an order as described. For example, some operations/steps may be further divided, while some operations/steps may be combined or partially combined. Therefore, an actual execution order may change according to an actual situation.

Herein the term "multiple" mentioned herein refers to two or more, the term "and/or" describes association between associated objects and represents that three candidate relationships. For example, "A and/or B" may represent following three cases: only A exists, both A and B exist, and only B exists. Generally, the character "/" indicates an "or" relationship between the associated objects.

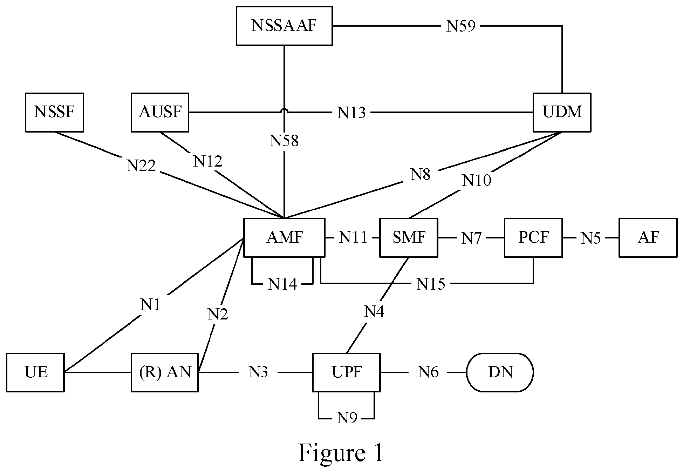

Figure 1 shows architecture of key network elements in a 5G network defined by the 3GPP (the 3rd Generation Partnership Project) organization. An access and mobility management function (AMF), a session management function (SMF), a user plane function (UPF), a policy control function (PCF), a network slice selection function (NSSF), an authentication server function (AUSF), and a unified data management (UDM), a network slice specific authentication and authorization function (NSSAAF), and the like are elements of a core network in the 5G network. User equipment (UE) may be a 5G terminal such as a mobile phone and a tablet computer. A (radio) access network ((R)AN) may be a 5G base-station device. A data network (DN) is a service server which the UE accesses.

Reference is further made to Figure 1. Among the elements of the 5G core network, the AMF is responsible for terminating an N2 interface of a control plane of a base-station device, and implementing coding and decoding of the next generation application protocol (NGAP) based on the stream control transmission protocol (SCTP). The base-station device and the AMF transmit the NGAP of an application layer through the SCTP of a transport layer, and non-access stratum (NAS) signaling data of the UE is carried in the NGAP. The SCTP is a protocol for the transport layer, and is similar to transmission control protocol (TCP) and user datagram protocol (UDP). The SCTP is widely applied in 4G long term evolution (LTE) networks and 5G core networks, but is not supported by most commercial network address translation (NAT) gateways and most commercial load balancers.

The AMF is also responsible for terminating an N1 interface of the UE, and implementing encryption and integrity protection of the NAS, responsible for functions such as UE access verification, authorization management, registration, connection, reachability, and mobility management, and responsible for unvarnished transmission of session management messages between the UE and the SMF.

Reference is further made to Figure 1. The (R)AN and the UPF interact via an N3 interface. The UPP and the UPP may interact via an N9 interface. The UPF and the SMF interact via an N4 interface. The UPF and the DN interact via an N6 interface. The SMF and the AMF interact via an N11 interface. The SMF and the PCF interact via an N7 interface. The SMF and the UDF interact via an N10 interface. The PCF and the AF interact via an N5 interface. The AMFs may interact with each other via an N14 interface. The AMF and the PCF interact via an N15 interface. The AMF and the UDM interact via an N8 interface. The AMF and the NSSF interact via an N22 interface. The AMF and the AUSF interact via an N12 interface. The AMF and the NSSAAF interact via an N58 interface. The AUSF and the UDM interact via an N13 interface. The UDM and the NSSAAF interact via an N59 interface.

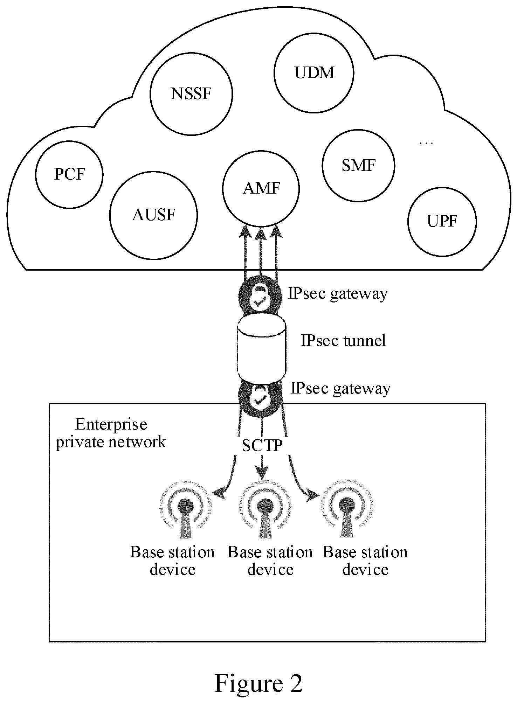

In conventional technology, deploying a core network for a 5G private network of an enterprise at a local equipment room does not concern an operation such as the NAT, because the interconnection is via a local area network. Hence, information exchanged among elements in the core network would not be exposed to a public network, and there is no security risk. Generally, deploying the elements in the core network of the 5G private network at a cloud requires encapsulating a layer of internet protocol security (IPsec) tunnel on the SCTP, as shown in Figure 2, so as to address a problem of the NAT for a SCTP connection between a base station and an AMF at the cloud and ensure message security during transmission in a public network. The IPsec is based on UDP or TCP transmission, and is capable to penetrate NAT gateways of most cloud service providers while providing encryption of messages.

The technical solution as shown in Figure 2 requires adding IPsec gateways. A side of base-station device needs to support the IPsec or addition of the IPsec gateways when the base-station device and the AMF are networked through establishing the IPsec tunnel, and the AMF at the cloud also needs an interfacial IPsec gateway. A provider of the cloud service should be capable to provide IPsec gateways, which result in dependency on the provider of the cloud service. IPsec configuration is complex. Hence, when the IPsec tunnel has been established between the IPsec gateways according to respective IP configurations and an IP of the AMF at the cloud or an IP of its IPsec gateway changes, it is necessary to change configurations of all base-station devices or configurations of their IPsec gateways, which results in a lot of work. In addition, most commercial devices do not support load-balancing distribution of the SCTP, and hence an SCTP endpoint at the cloud becomes a bottleneck of signaling performances of an AMF system, and an advantage of the cloud in horizontal expansion cannot be utilized to improve the capability of processing services at the AMF. Moreover, both the IPsec tunnel and the SCT adopt IP connection, and hence when a service of an AMF corresponding to an IP fails, the base-station device cannot switch to a normal AMF to continue the service. That is, a capability of handling faults is weak.

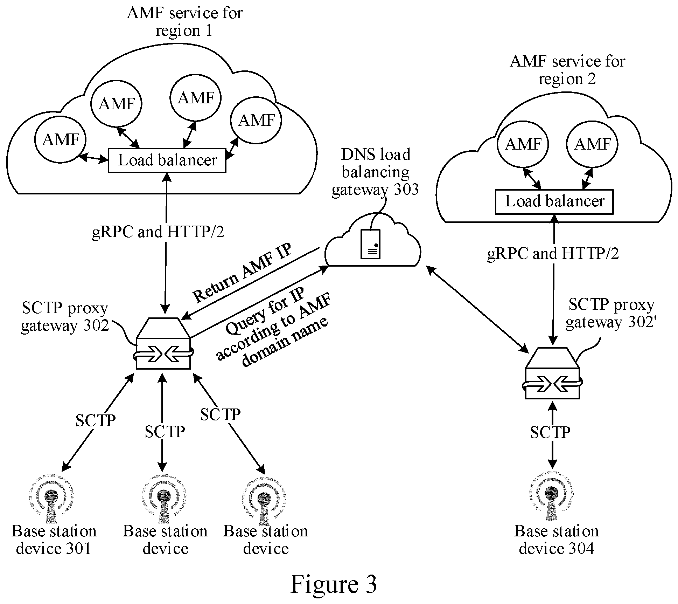

On a basis of the foregoing problems, a novel solution is provided according to embodiments of the present disclosure. Reference is made to Figure 3. In a specific embodiment, an SCTP proxy gateway is added between the base-station device and the AMF, and SCTP messages are converted into Google remote procedure call (gRPC) or hypertext transfer protocol 2.0 (HTTP/2) messages through the SCTP proxy gateway. In one aspect, security and reliability of transmitting service data transmission in a public network are guaranteed. In another aspect, converting an SCTP connection into a gRPC or HTTP/2 connection renders deployment of the AMF more flexible. For example, the AMF may be flexibly deployed to cloud computing resources provided by any cloud service provider. Thereby, the deployment of the AMF is free from dependency on cloud service providers.

In the system architecture as shown in Figure 3, a base-station device 301 may transmit an SCTP-connection request to an SCTP proxy gateway 302, and then the SCTP proxy gateway 302 establishes a connection under the SCTP (i.e., the SCTP connection) with the base-station device 301. After the SCTP connection is established between the base-station device 301 and the SCTP proxy gateway 302, the base-station device 301 may transmit a request for establishing a service (i.e., service-setup request) to the SCTP proxy gateway 302 through the SCTP connection, and then the SCTP proxy gateway 302 encapsulates request data comprises in the service-setup request (that is, a payload of the service-setup request) as a request message (e.g., a gRPC message or an HTTP/2 message).

Moreover, the SCTP proxy gateway 302 may transmit a DNS query request to a domain name system (DNS) load balancing gateway 303 according to a preconfigured AMF domain name. The DNS load balancing gateway 303 allocates a corresponding AMF network address (for example, allocates an AMF network address in region 1) to the SCTP proxy gateway 302 in response to the DNS query request, and returns a DNS query response. After receiving the DNS query response returned by the DNS load balancing gateway 303, the SCTP proxy gateway 302 obtains the allocated AMF network address from the DNS query response, and then transmits the request message to a target AMF corresponding to the AMF network address. In an optional embodiment, the request message may be transmitted to a load balancer corresponding to the AMF network address, and then distributed by the load balancer to an AMF instance for processing. After completing the processing, the AMF instance returns a responding message to the SCTP proxy gateway 302. Then, the SCTP proxy gateway 302 encapsulates the received responding message through the SCTP, and transmits the responding message to the base-station device 301.

Similarly, a base-station device 304 may transmit an SCTP-connection request to an SCTP proxy gateway 302', and then SCTP proxy gateway 302' establishes an SCTP connection with the base-station device 304. After the SCTP connection is established between the base-station device 304 and the SCTP proxy gateway 302', the base-station device 304 may transmit a service-setup request to the SCTP proxy gateway 302' through the SCTP connection. Then, the SCTP proxy gateway 302' encapsulates request data comprised in the service-setup request (that is, a payload of the service-setup request) as a request message (e.g., a gRPC message or an HTTP/2 message).

Moreover, the SCTP proxy gateway 302' may transmit a DNS query request to the DNS load balancing gateway 303 according to a preconfigured AMF domain name. The DNS load balancing gateway 303 allocates a corresponding AMF network address (e.g., allocates an AMF network address of region 2) to the SCTP proxy gateway 302' in response to the DNS query request, and returns a DNS query response. After receiving the DNS query response returned by the DNS load balancing gateway 303, the SCTP proxy gateway 302' obtains the allocated AMF network address from the DNS query response, and then transmits the request message to a target AMF corresponding to the AMF network address. In an optional embodiment, the request message may be transmitted to a load balancer corresponding to the AMF network address, and then distributed by the load balancer to an AMF instance for processing. After completing the processing, the AMF instance returns a responding message to the SCTP proxy gateway 302'. Then, the SCTP proxy gateway 302' encapsulates the received responding message through the SCTP, and transmits the responding message to the base-station device 304.

In the system architecture of the embodiment shown in Figure 3, a capability of multi-level load balancing distribution, e.g., the DNS load balancing gateway 303 and the load balancer at a traffic entrance of the AMF, are deployed. Thereby, the AMF can fully exploit a capability of horizontal expansion of the cloud, which improves a capability of processing services. The SCTP proxy gateway obtains a network address through parsing an AMF domain name, thereby reducing a workload of configurations greatly. Moreover, the DNS load balancing gateway 303 may deploy the AMF across the cloud based on geo-locations, and allocate an AMF service based on a principle of proximity according to a source IP (i.e., an IP of the SCTP proxy gateway) of the DNS query request, thereby improving a quality of services. When an IP of the AMF changes, it is only necessary to record the change on the DNS load balancing gateway 303. When an AMF service corresponding to an IP is abnormal, the SCTP proxy gateway is capable to switch quickly to a normal AMF service based on the query response returned by the DNS load balancing gateway 303.

In the system architecture shown in Figure 3, the IPsec gateway at a side of the base station is replaced with the SCTP proxy gateway, and the interfacial IPsec gateway at the cloud is removed, in comparison with the system architecture as shown in Figure 2. Thereby, dependency on cloud-service providers is lessened, and a cost of purchasing various services is effectively reduced.

Hereinafter implementations of technical solutions according to embodiments of the present disclosure are described in detail.

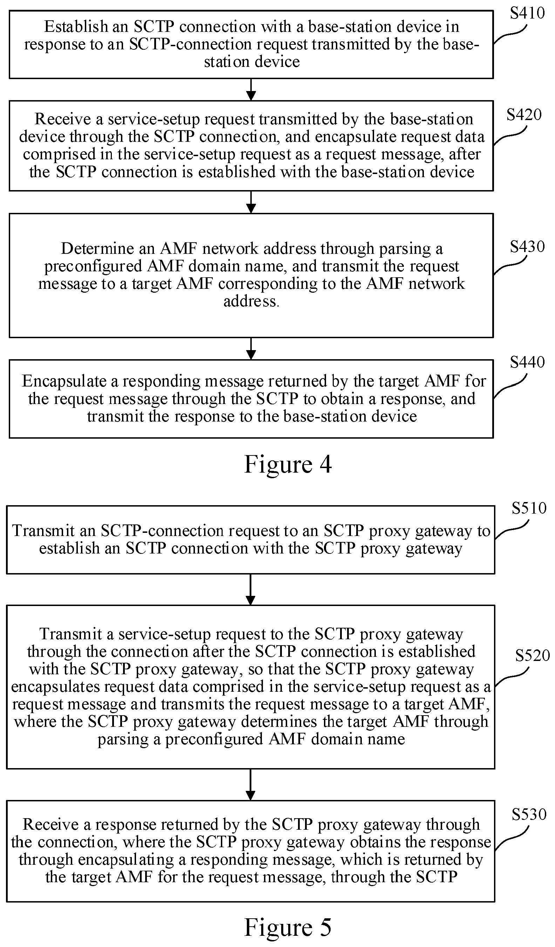

Figure 4 is a flowchart of a method for communication according to an embodiment of the present disclosure. The method for communication may be performed by an SCTP proxy gateway. As shown in Figure 4, the method comprises at least steps S410 to S440, of which details are as follows.

In S410, an SCTP connection is established with a base-station device in response to an SCTP-connection request transmitted by the base-station device.

In an embodiment, a network address, such as an IP address, of the SCTP proxy gateway may be preconfigured in the base-station device, and the base-station device may transmit the SCTP-connection request to the SCTP proxy gateway based on the preconfigured network address of the SCTP proxy gateway. After receiving the SCTP-connection request, the SCTP proxy gateway may perform a communication handshake with the base-station device, so as to establish the SCTP connection with the base-station device.

Herein the base-station device may be a general mobile communication base station, and may be another device configured to implement functions of a mobile communication base station, for example, may be a micro base station deployed indoors.

In S420, after the SCTP connection is established with the base-station device, a service-setup request transmitted by the base-station device through the SCTP connection is received, and request data comprised in the service-setup request is encapsulated as a request message.

In an embodiment, the request data comprised in the service-setup request may be encapsulated as a Google remote procedure call message, that is, a gRPC message. Alternatively, the request data comprised in the service-setup request may be encapsulated as a hypertext transfer protocol message, that is, an HTTP/2 message.

In S430, an AMF network address is determined through parsing a preconfigured AMF domain name, and the request message is transmitted to a target AMF corresponding to the AMF network address.

In an embodiment, determining the AMF network address through parsing the preconfigured AMF domain name may comprise a following step. The SCTP proxy gateway generates a DNS query request according to the preconfigured AMF domain name, and transmits the DNS query request to the DNS load balancing gateway, so that the DNS load balancing gateway allocates the corresponding AMF network address in response to the DNS query request. Afterwards, the SCTP proxy gateway may receive a DNS query response returned by the DNS load balancing gateway, and obtain the AMF network address from the DNS query response.

In an embodiment, transmitting the request message to the target AMF corresponding to the AMF network address may comprises a following step. The SCTP proxy gateway transmits the request message to an AMF load balancer according to the AMF network address, so that the AMF load balancer distributes the request message to a designated AMF instance for processing. The designated AMF instance is the target AMF. Accordingly, the SCTP proxy gateway may receive a responding message which the designated AMF instance returns for the request message.

In an embodiment, the preconfigured AMF domain name is a globally shared AMF domain name, and the AMF network address corresponding to the AMF domain name may be a network address of an AMF in proximity of the base-station device. That is, herein the DNS load balancing gateway may allocate a near AMF to communicate with the base-station device.

In an embodiment, the preconfigured AMF domain name is a private AMF domain name, and the AMF network address corresponding to the AMF domain name may be a network address of a private AMF of the base-station device. That is, herein a requirement on the private AMF can be met.

Reference is further made to Figure 4. In S440, a responding message returned by the target AMF for the request message is encapsulated through the SCTP to obtain a response, and the response is transmitted to the base-station device.

A technical solution according to an embodiment corresponding to Figure 4 optimizes a networking mode between the base-station device and the AMF by utilizing the SCTP proxy gateway. The AMF is flexibly deployed while ensuring communication security between the AMF and the base-station device, and is reasonably allocated through searching for the AMF network address according to the AMF domain name. The AMF have an improved capability of processing services. In addition, it is not necessary to deploy additional devices in a cloud at which the AMF is located, which reduces a cost of remote deployment.

In an embodiment on a basis of the technical solution as shown in Figure 4, the SCTP proxy gateway may receive a request for processing a serve (i.e., a service-processing request) transmitted by the base-station device through the SCTP connection after the SCTP connection is established with the base-station device. In such case, the SCTP proxy gateway may encapsulate request data comprised in the service-processing request as a service-processing message, and transmit the service-processing message to the target AMF. Then the SCTP proxy gateway may encapsulate a responding message, which is returned by the target AMF for the service-processing message, through the SCTP, and transmit the responding message to the base-station device. Herein a process of service processing between the base-station device and the AMF is implemented through the SCTP proxy gateway.

In an embodiment, the SCTP proxy gateway may determine another AMF network address through re-parsing the preconfigured AMF domain name, in response to detecting that the target AMF is abnormal. Accordingly, the SCTP proxy gateway responds to the service-processing request from the base-station device based on such new AMF network address obtained through the re-querying. Herein the SCTP proxy gateway is capable to switch to a normal AMF service timely when the original AMF is abnormal.

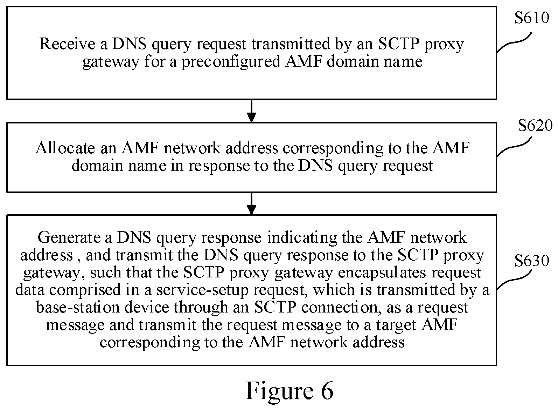

Technical solutions according to embodiments corresponding to Figure 4 are described from a side of the SCTP proxy gateway. Hereinafter implementation of technical solutions in embodiments of the present disclosure are described in details from perspectives of the base-station device and the DNS load balancing gateway, respectively, with reference to Figure 5 and Figure 6.

Figure 5 is a flowchart of a method for communication according to another embodiment of the present disclosure. The method may be performed by a base-station device. As shown in Figure 5, the method comprises at least steps S510 to S530, of which details are as follows.

In S510, an SCTP-connection request is transmitted to an SCTP proxy gateway to establish an SCTP connection with the SCTP proxy gateway.

In an embodiment, a network address, such as an IP address, of the SCTP proxy gateway may be preconfigured in the base-station device, and the base-station device may transmit the SCTP-connection request to the SCTP proxy gateway based on the preconfigured network address of the SCTP proxy gateway. After receiving the SCTP-connection request, the SCTP proxy gateway may perform a communication handshake with the base-station device, so as to establish the SCTP connection with the base-station device.

In S520, after the SCTP connection is established with the SCTP proxy gateway, a service-setup request is transmitted to the SCTP proxy gateway through the connection, so that the SCTP proxy gateway encapsulates request data comprised in the service-setup request as a request message and transmits the request message to a target AMF, where the SCTP proxy gateway determines the target AMF through parsing a preconfigured AMF domain name.

In an embodiment, the SCTP proxy gateway may encapsulate the request data comprised in the service-setup request as a Google remote procedure call message, that is, a gRPC message. Alternatively, the SCTP proxy gateway may encapsulate the request data comprised in the service-setup request as a hypertext transfer protocol message, that is, an HTTP/2 message.

In S530, a response returned by the SCTP proxy gateway through the connection is received, where the SCTP proxy gateway obtains the response through encapsulating a responding message, which is returned by the target AMF for the request message, through the SCTP.

Specific details of implementing an embodiment as shown in Figure 5 may refer to those in forgoing embodiments, and are not repeated herein.

Figure 6 is a flowchart of a method for communication according to an embodiment of the present disclosure. The method for communication may be performed by a DNS load balancing gateway. As shown in Figure 6, the method comprises at least steps S610 to S630, of which details are as follows.

In S610, a DNS query request transmitted by an SCTP proxy gateway for a preconfigured AMF domain name is received.

In S620, an AMF network address corresponding to the AMF domain name is allocated in response to the DNS query request.

In an embodiment, the preconfigured AMF domain name is a globally shared AMF domain name, and the AMF network address, corresponding to the AMF domain name and allocated by the DNS load balancing gateway, may be a network address of an AMF in proximity of the base-station device. That is, herein the DNS load balancing gateway may allocate a near AMF to communicate with the base-station device.

In an embodiment, the preconfigured AMF domain name is a private AMF domain name, and the AMF network address, corresponding to the AMF domain name and allocated by the DNS load balancing gateway, may be a network address of a private AMF of the base-station device. That is, herein a requirement on the private AMF can be met.

In S630, a DNS query response indicating the AMF network address is generated, and the DNS query response is transmitted to the SCTP proxy gateway, such that the SCTP proxy gateway encapsulates request data comprised in a service-setup request, which is transmitted by a base-station device through an SCTP connection, as a request message and transmit the request message to a target AMF corresponding to the AMF network address.

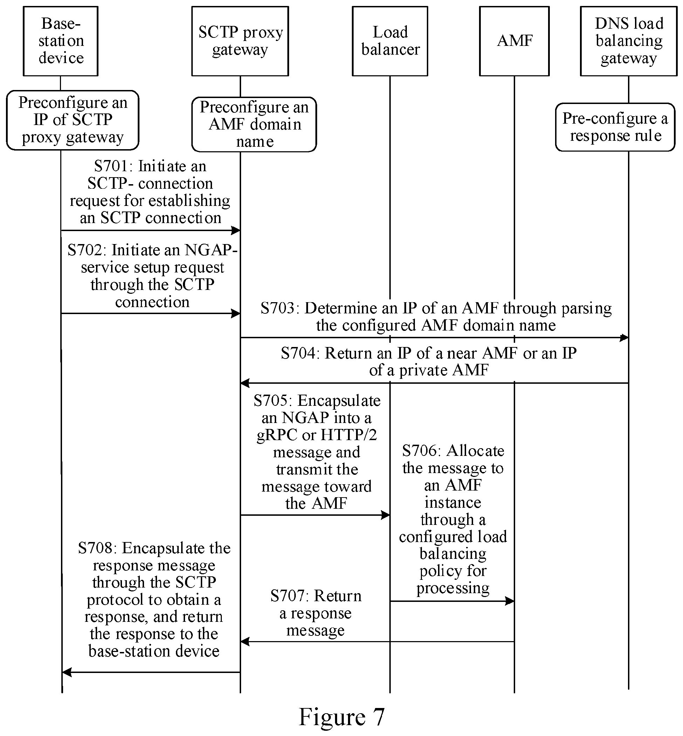

Hereinabove details of implementing technical solutions according to embodiments of the present disclosure are described from perspectives of the SCTP proxy gateway, the base-station device, and the DNS load balancing gateway, respectively. Hereinafter interaction among these entities is described in detail with reference to Figure 7.

Before steps of the method for communication as shown in Figure 7 is performed, the base-station device, the SCTP proxy gateway, and the DNS load balancing gateway needs to preconfigured. In a specific embodiment, an IP address of the SCTP proxy gateway is preconfigured in the base-station device, an AMF domain name is preconfigured in the SCTP proxy gateway, and a responding rule is preconfigured in the DNS load balancing gateway.

In an embodiment, the base-station device is deployed in a region covered by a private network, and an AMF SCTP IP configured in the base-station device may be replaced with an SCTP monitoring IP of the SCTP proxy gateway in such region. Accordingly, the base-station device may transmit a request to the SCTP proxy gateway in such region according to the SCTP monitoring IP.

When deploying the SCTP proxy gateway, the AMF domain name may be configured according to a requirement of a service party. In a case that the service party selects a shared 5G core network at a cloud, the AMF domain name configured in the SCTP proxy gateway is a globally shared AMF domain name. In a case that the service party selects a private 5G core network at a cloud and applies for a private domain name, the AMF domain name configured in the SCTP proxy gateway is a private AMF domain name of the service party.

Moreover, in order to implement a service according to a principle of proximity, DNS load balancing (BL) may be preconfigured when a 5G core network is deployed in different regions at a cloud. In a case that a source address of a DNS request comes from the SCTP proxy gateway, an IP of an AMF for a corresponding region of the 5G core network may be selected according to service configurations and then returned. Moreover, an intervention mode may be added, such that configured IPs can be returned for different source addresses. For example, a configured IP is returned for a certain source address.

Reference is made to Figure 7 on a basis of the information preconfigured as above. In an embodiment, the method for communication comprises following steps S701 to S708.

In S701, a base-station device initiates an SCTP-connection request for establishing an SCTP connection toward an SCTP proxy gateway.

After receiving the SCTP-connection request transmitted by the base-station device, the SCTP proxy gateway establishes of the SCTP connection through four SCTP-communication handshakes.

In S702, the base-station device initiates an NGAP-service setup request through the SCTP connection.

In an embodiment, the base-station device may transmit a message, such as a next generation (NG) setup request and an uplink NAS transport message, to the SCTP proxy gateway. The SCTP proxy gateway fetches content (a payload) carried through the SCTP and encapsulates the content as a gRPC message or HTTP/2 message.

In S703, the SCTP proxy gateway determines an AMF IP through parsing a configured AMF domain name.

In an embodiment, the SCTP proxy gateway searches for the corresponding AMF IP according to the configured AMF domain name through DNS LB (that is, the DNS load balancing gateway).

In S704, a DNS load balancing gateway returns an IP of a near AMF or an IP of a private AMF to the SCTP proxy gateway.

In an embodiment, the IP of the near AMF is returned in a case that the configured AMF domain name is a domain name of a globally shared AMF, and the IP of the private AMF is returned in a case that the configured AMF domain name is a domain name of a private AMF.

In S705, an NGAP is encapsulated into the gRPC message or the HTTP/2 message, and the message is transmitted toward the AMF.

In S706, a load balancer in a cloud allocates the message to an AMF instance, through a configured load balancing policy, for processing.

In an embodiment, the load balancer in the cloud may adopt Layer-4 (that is, L4) or Layer-7 (that is, L7) load balancing, so as to forward the gRPC message and/or the HTTP/2 message to the AMF instance in a pool of AMF instances according to a configuration rule and a load condition.

Generally, the L4 load balancing operates in a transport layer at an intermediate position of an open system interconnection reference model (i.e., an OSI model), and handles transmission of messages without managing content of messages. That is, the L4 load balancing merely handles network packets transmitted to and received from an upstream service, and does not check specific content in the packets. The L4 load balancing may check several head packets in a TCP flow, so as to decide whether to restrict routing.

Generally, the L7 load balancing operates in an application layer at a top of the OSI model, and deals with real content in each message. On the Internet, the HTTP is a dominant Layer-7 Protocol in network communications. The L7 load balancing is more complex and exquisite than the L4 load balancing with respect to routing network flows, and is especially suitable for TCP-based transmission such as the HTTP. An L7 load balancer intercepts network flows and reads content in the messages, and is capable to decide on load balancing based on the content (such as information in a uniform resource locator (URL) or in a cookie). Afterwards, the L7 load balancer establishes a new TCP connection for selecting an upstream service (or reuse an existing TCP connection through HTTP keepalives), in order to transmit a request for such service.

In S707, the AMF instance returns a responding message to the SCTP proxy gateway after completing the processing.

In S708, the SCTP proxy gateway encapsulates the responding message through the SCTP to obtain a response, and returns the response to the base-station device.

Hence, technical solutions according embodiments of the present disclosure optimize a networking mode between the base-station device and the AMF by utilizing the SCTP proxy gateway. The AMF is flexibly deployed while ensuring communication security between the AMF and the base-station device, and is reasonably allocated through searching for the AMF network address according to the AMF domain name. Thereby, the AMF can fully exploit a capability of horizontal expansion of the cloud, which improves a capability of processing services. The SCTP proxy gateway is capable to switch to a normal AMF service timely when an original AMF is abnormal, which improves a capability of handling faults and a quality of services. In addition, it is not necessary to deploy additional devices in a cloud at which the AMF is located, which reduces a cost of remote deployment.

The following describes the apparatus embodiments of the present disclosure, which may be used for performing the method for communication in the foregoing embodiments of the present disclosure. For details not disclosed in the apparatus embodiments of the present disclosure, reference is made to the embodiments of the foregoing method for communication of the present disclosure.

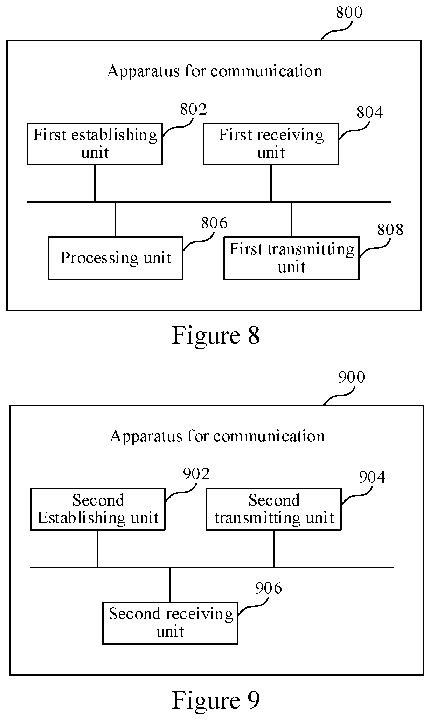

Figure 8 is a block diagram of an apparatus for communication according to an embodiment of the present disclosure. The apparatus may be disposed in an SCTP proxy gateway.

Reference is made to Figure 8. In an embodiment, the apparatus 800 for communication comprises a first establishing unit 802, a first receiving unit 804, a processing unit 806, and a first transmitting unit 808.

The first establishing unit 802 is configured to establish a connection under an SCTP with a base-station device in response to an SCTP-connection request transmitted by the base-station device. The first receiving unit 804 is configured to receive a request, which is for establishing a service and which is transmitted by the base-station device through the connection, and encapsulate request data comprised in the request for establishing the service as a request message, after the connection is established with the base-station device. The processing unit 806 is configured to determine an AMF network address through parsing a preconfigured AMF domain name, and transmit the request message to a target AMF corresponding to the AMF network address. The first transmitting unit 808 is configured to encapsulate a responding message, which is returned by the target AMF for the request message, through the SCTP to obtain a response, and transmit the response to the base-station device.

In some embodiments, the processing unit 806 is configured to: generate a DNS query request for the preconfigured AMF domain name; transmit the DNS query request to a DNS load balancing gateway to enable the DNS load balancing gateway to allocate the AMF network address in response to the DNS query request; and receive a DNS query response, which is returned by the DNS load balancing gateway, to obtain the AMF network address from the DNS query response.

In some embodiments, the processing unit 806 is configured to: transmit the request message to an AMF load balancer corresponding to the AMF network address to enable the AMF load balancer to allocate the request message to a designated AMF instance for processing the request message, where the designated AMF instance is the target AMF. The first receiving unit 804 is configured to receive the responding message which is returned by the specified AMF instance for the request message.

In some embodiments, the first receiving unit 804 is further configured to: after the connection is established with the base-station device, receive a request, which is for processing a service and which is transmitted by the base-station device through the connection, encapsulate request data comprised in the request for processing the service as a service-processing message, and transmit the service-processing message to the target AMF. The first transmitting unit 808 is further configured to encapsulate another responding message, which is returned by the target AMF for the service-processing message, through the SCTP, and transmit the another responding message to the base-station device.

In some embodiments, the processing unit 806 is further configured to: determine another AMF network address through re-parsing the preconfigured AMF domain name, in response to detecting that the target AMF is abnormal; and respond to a request, which is for processing a service and which is from the base-station device, according to the another AMF network address.

In some embodiments, the preconfigured AMF domain name comprises a globally shared AMF domain name, and the AMF network address is a network address of an AMF in proximity of the base-station device.

In some embodiments, the preconfigured AMF domain name comprises a private AMF domain name, and the AMF network address is a network address of a private AMF of the base-station device.

In some embodiments, the first receiving unit 804 is further configured to encapsulate the request data comprised in the request for establishing the service as a Google remote procedure call message, or encapsulate the request data comprised in the request for establishing the service as a hypertext transfer protocol message.

Figure 9 is a block diagram of an apparatus for communication according to another embodiment of the present disclosure. The apparatus may be disposed in a base-station device.

Reference is made to Figure 9. In an embodiment, the apparatus 900 for communication comprises a second establishing unit 902, a second transmitting unit 904, and a second receiving unit 906.

The second establishing unit 902 is configured to transmit an SCTP-connection request to an SCTP proxy gateway to establish a connection under an SCTP with the SCTP proxy gateway. The second transmitting unit 904 is configured to transmit a request for establishing a service to the SCTP proxy gateway through the connection, after the connection is established with the SCTP proxy gateway, to enable the SCTP proxy gateway to encapsulate request data comprised in the request for establishing the service as a request message and transmit the request message to a target AMF, where the SCTP proxy gateway determines the target AMF through parsing a preconfigured AMF domain name. The second receiving unit 906 is configured to receive a response, which is returned by the SCTP proxy gateway through the connection, where the SCTP proxy gateway obtains the response through encapsulating a responding message, which is returned by the target AMF for the request message, through the SCTP.

In some embodiments, the second establishing unit 902 is configured to transmit the SCTP-connection request to the SCTP proxy gateway according to a preconfigured network address of the SCTP proxy gateway.

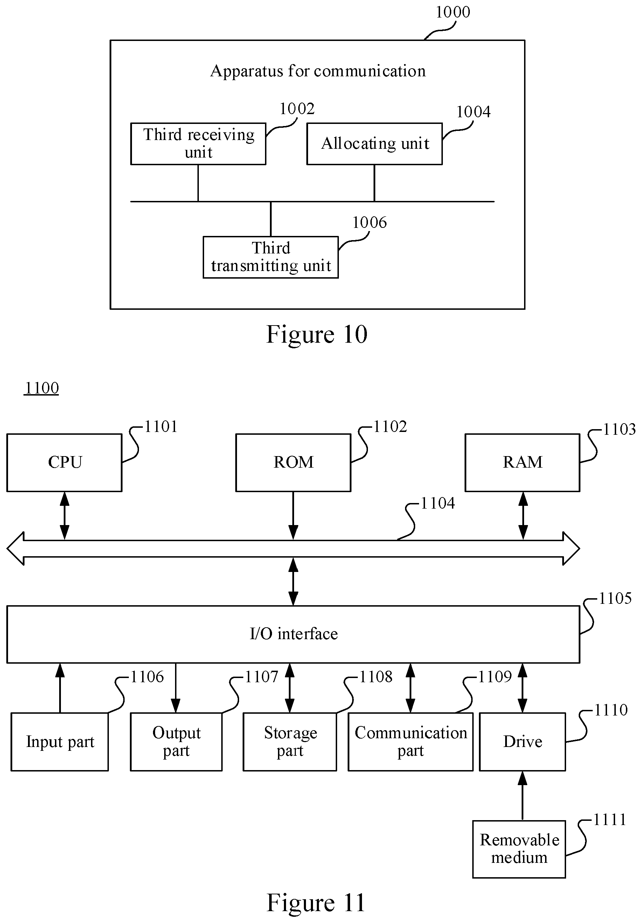

Figure 10 is a block diagram of an apparatus for communication according to another embodiment of the present disclosure. The apparatus may be disposed in a DNS load balancing gateway.

Reference is made to Figure 10. In an embodiment, the apparatus 1000 for communication comprises a third receiving unit 1002, an allocating unit 1004, and a third transmitting unit 1006.

The third receiving unit 1002 is configured to receive a DNS query request, which is transmitted by an SCTP proxy gateway for a preconfigured AMF domain name. The allocating unit 1004 is configured to allocate an AMF network address corresponding to the AMF domain name in response to the DNS query request. The third transmitting unit 1006 is configured to generate a DNS query response indicating the AMF network address, and transmit the DNS query response to the SCTP proxy gateway, to enable the SCTP proxy gateway to encapsulate request data comprised in a request, which is for establishing a service and transmitted by a base-station device through a connection under an SCTP, as a request message and transmit the request message to a target AMF corresponding to the AMF network address.

Figure 11 is a schematic structural diagram of a computer system of an electronic device configured to implement an embodiment of the present disclosure.

The computer system 1100 of the electronic device as shown in Figure 11 is merely an example, and does not constitute any limitation on functions or applications of embodiments of the present disclosure.

As shown in Figure 11, the computer system 1100 includes a central processing unit (CPU) 1101 capable to perform various appropriate actions and processing, for example, perform the method according foregoing embodiments, according to a program stored in a read-only memory (ROM) 1102 or a program loaded into a random-access memory (RAM) 1103 from a storage component 1108. The RAM 1103 further stores various programs and data required for system operations. The CPU 1101, the ROM 1102, and the RAM 1103 are connected to each other via a bus 1104. An input/output (I/O) interface 1105 is coupled to the bus 1104.

Components connected to the I/O interface 1105 includes: an input component 1106, including a keyboard, a mouse, or the like; an output component 1107, including a cathode ray tube (CRT), a liquid crystal display (LCD), a speaker, and the like; the storage component1108, including a hard disk or the like; and a communication component 1109, including a network interface card such as an LAN card or a modem. The communication component 1109 performs communication via a network such as the Internet. A driver 1110 is further coupled to the I/O interface 1105 on requirements. A removable medium 1111, such as a magnetic disk, an optical disc, a magneto-optical disk, or a semiconductor memory, is installed on the drive 1110 on requirement, so that a computer program read from the removable medium can be installed on the storage component 1108 on requirement.

Particularly, according to an embodiment of the present disclosure, the foregoing processes described with reference to the flowcharts may be implemented as computer software programs. A computer program product is provided according to an embodiment of the present disclosure. The computer program product includes a computer program stored in a computer-readable medium. The computer program includes program codes for performing the method as shown in the flowcharts. In such embodiment, the computer program may be downloaded and installed from the network via the communication portion 1109, and/or installed from the removable medium 1111. When the computer program is executed by the CPU 1101, various functions defined in the method and the apparatus according to embodiments of the present disclosure are implemented.

The computer-readable medium according to embodiments the present disclosure may be a computer-readable signal medium, a computer-readable storage medium, or any combination of the two. For example, the computer-readable storage medium may be, but is not limited to, an electric/magnetic/optical/electromagnetic/infrared/semi-conductor system/apparatus/component, or any combination of the above forms. A more specific example of the computer-readable storage medium may include, but is not limited to, an electrical connection having one or more wires, a portable computer magnetic disk, a hard disk, a random-access memory (RAM), a read-only memory (ROM), an erasable programmable read-only memory (EPROM or a flash memory), an optical fiber, a compact disk read-only memory (CD-ROM), an optical storage device, a magnetic storage device, or any appropriate combination of the above forms. Herein the computer-readable storage medium may be any tangible medium containing or storing a program, and the program may be used by, or in combination with, an instruction executing system/apparatus/device. Herein the computer-readable signal medium may include a data signal transmitted in a baseband or propagating as a part of a carrier wave, and the data signal carries computer-readable program codes. The propagating data signal may be various forms, which include but is not limited to an electromagnetic signal, an optical signal, or any suitable combination of the two. The computer-readable signal medium may be any computer-readable medium other than the computer-readable storage medium. The computer-readable medium may send, carry, or transmit a program, and the program is used by or in combination with an instruction executing system/apparatus/device. The program codes contained in the computer-readable medium may be transmitted via any appropriate medium, which includes but is not limited to: a wireless medium, a wire, an optical cable, radio frequency, any suitable combination of the above forms, or the like.

The flowcharts and block diagrams in the drawings illustrate feasible system architecture, functions, and operations that may be implemented by a system, a method, and a computer program product according to various embodiments of the present disclosure. In this regard, each box in a flowchart or a block diagram may represent a module, a program segment, or a part of codes. The module, the program segment, or the part of codes includes one or more executable instructions configured to implement a designated logic function. In some alternative embodiments, functions as annotations in the boxes may be implemented in a sequence different from that as shown in the drawings. For example, in practice, two boxes shown in succession may be performed substantially simultaneously, and sometimes may be performed in a reverse sequence, which is determined by related functions. Each block/box and a combination of block/boxes in a block diagram and/or a flowchart may be implemented through a dedicated hardware-based system, which is configured to achieve a specified function or operation, or may be implemented through a combination of dedicated hardware and computer instructions.

A unit described herein may be implemented in software manner or hardware, and may be provided in a processor. Names of the units do not constitute a limitation on the units in some cases.

In another aspect, a computer readable medium is further provided according to embodiments of the present disclosure. The computer readable medium may be comprised in the electronic device described in the forgoing embodiments, or may exist independently without being assembled into an electronic device. The computer-readable medium carries one or more programs, and the one or more programs when executed by the electronic device configure the electronic device to implement the method described in the foregoing embodiments.

Although multiple modules or units of a device configured to perform operations are discussed in the foregoing detailed description, such division is not mandatory. In practice, the features and functions of two or more modules or units as described above may be specifically implemented in one module or unit in some embodiments, and similarly features and functions of one module or unit as described above may be further divided into multiple modules or units in some embodiments.

Description of the foregoing embodiments facilitates those skilled in the art would easily understanding that the exemplary implementations described herein may be implemented through software, or software in combination with necessary hardware. Therefore, technical solutions in embodiments of the present disclosure may be implemented as a software product. The software product may be stored in a non-volatile storage medium (which may be a CD-ROM, a USB flash drive, a removable hard disk, or the like) or in the network, comprise several instructions for instructing a computing device (which may be a personal computer, a server, a touch terminal, a network device, or the like) to perform the method according to the foregoing embodiments of the present disclosure.

Those skilled in the art that read the specification and practice the disclosed implementations would easily reach other implementations of the present disclosure. The present disclosure is intended to cover any variation, use, or adaptive change thereof. These variations, uses, or adaptive changes follow a general principle of the present disclosure and comprise common general knowledge or common technical means in the art which are not disclosed herein.

Various modifications and changes can be made without departing from the scope of the present disclosure. The scope of the present disclosure is only limited by the appended claims.

## Claims

1. A method for communication, executable by a stream control transmission protocol, SCTP, proxy gateway, wherein the method comprises:
establishing (S410) a connection under an SCTP with a base-station device in response to an SCTP-connection request transmitted by the base-station device;
after establishing the connection with the base-station device,
receiving (S420) a request, which is for establishing a service and which is transmitted by the base-station device through the connection, and
encapsulating (S420) request data comprised in the request for establishing the service as a request message;
determining (S430) an access and mobility management function, AMF, network address through parsing a preconfigured AMF domain name;
transmitting (S430) the request message to a target AMF corresponding to the AMF network address;
encapsulating (S440) a responding message, which is returned by the target AMF for the request message, through the SCTP to obtain a response; and
transmitting (S440) the response to the base-station device.

2. The method according to claim 1, wherein the determining the AMF network address through parsing the preconfigured AMF domain name comprises:
generating a domain-name-system, DNS, query request for the preconfigured AMF domain name;
transmitting the DNS query request to a DNS load balancing gateway to enable the DNS load balancing gateway to: allocate the AMF network address in response to the DNS query request; and
receiving a DNS query response, which is returned by the DNS load balancing gateway, to obtain the AMF network address from the DNS query response.

3. The method according to claim 1, wherein:
the transmitting the request message to the target AMF corresponding to the AMF network address comprises:
transmitting the request message to an AMF load balancer corresponding to the AMF network address to enable the AMF load balancer to: allocate the request message to a designated AMF instance for processing the request message, wherein the designated AMF instance is the target AMF; and
the method further comprises:
receiving the responding message which is returned by the specified AMF instance for the request message.

4. The method according to claim 1, wherein after establishing the connection with the base-station device, the method further comprises:
receiving a request, which is for processing a service and which is transmitted by the base-station device through the connection;
encapsulating request data comprised in the request for processing the service as a service-processing message;
transmitting the service-processing message to the target AMF;
encapsulating another responding message, which is returned by the target AMF for the service-processing message, through the SCTP; and
transmitting the another responding message to the base-station device.

5. The method according to claim 1, further comprising:
determining another AMF network address through re-parsing the preconfigured AMF domain name, in response to detecting that the target AMF is abnormal; and
responding to a request, which is for processing a service and which is from the base-station device, according to the another AMF network address.

6. The method according to claim 1, wherein the preconfigured AMF domain name comprises a globally shared AMF domain name, and the AMF network address is a network address of an AMF in proximity of the base-station device.

7. The method according to claim 1, wherein the preconfigured AMF domain name comprises a private AMF domain name, and the AMF network address is a network address of a private AMF of the base-station device.

8. The method according to any one of claims 1 to 7, wherein encapsulating the request data comprised in the request for establishing the service as the request message comprises:
encapsulating the request data comprised in the request for establishing the service as a Google remote procedure call message, or
encapsulating the request data comprised in the request for establishing the service as a hypertext transfer protocol message.

9. A method for communication, executable by a base-station device, wherein the method comprises:
transmitting (S510) a stream control transmission protocol, SCTP, -connection request to an SCTP proxy gateway to establish a connection under an SCTP with the SCTP proxy gateway;
transmitting (S520) a request for establishing a service to the SCTP proxy gateway through the connection, after establishing the connection with the SCTP proxy gateway, to enable the SCTP proxy gateway to:
encapsulate request data comprised in the request for establishing the service as a request message; and
transmit the request message to a target access and mobility management function, AMF, wherein the SCTP proxy gateway determines the target AMF through parsing a preconfigured AMF domain name; and
receiving (S530) a response, which is returned by the SCTP proxy gateway through the connection, wherein the SCTP proxy gateway obtains the response through encapsulating a responding message, which is returned by the target AMF for the request message, through the SCTP.

10. The method according to claim 9, wherein transmitting the SCTP-connection request to the SCTP proxy gateway comprises:
transmitting the SCTP-connection request to the SCTP proxy gateway according to a preconfigured network address of the SCTP proxy gateway.

11. A method for communication, executable by a domain-name-system, DNS, load balancing gateway, wherein the method comprises:
receiving (S610) a DNS query request, which is transmitted by a stream control transmission protocol, SCTP, proxy gateway for a preconfigured access and mobility management function, AMF, domain name;
allocating (S620) an AMF network address corresponding to the AMF domain name in response to the DNS query request;
generating (S630) a DNS query response indicating the AMF network address; and
transmitting (S630) the DNS query response to the SCTP proxy gateway, to enable the SCTP proxy gateway to:
encapsulate request data comprised in a request, which is for establishing a service and transmitted by a base-station device through a connection under an SCTP, as a request message; and
transmit the request message to a target AMF corresponding to the AMF network address.

12. An apparatus for communication, deployed on a stream control transmission protocol, SCTP, proxy gateway, wherein the apparatus comprises:
a first establishing unit (802), configured to establish a connection under a stream control transmission protocol, SCTP, with a base-station device in response to an SCTP-connection request transmitted by the base-station device;
a first receiving unit (804), configured to receive a request, which is for establishing a service and which is transmitted by the base-station device through the connection, and encapsulate request data comprised in the request for establishing the service as a request message, after the connection is established with the base-station device;
a processing unit (806), configured to determine an access and mobility management function, AMF, network address through parsing a preconfigured AMF domain name, and transmit the request message to a target AMF corresponding to the AMF network address; and
a first transmitting unit (808), configured to encapsulate a responding message, which is returned by the target AMF for the request message, through the SCTP to obtain a response, and transmit the response to the base-station device.

13. A computer-readable medium, storing a computer program, wherein:
the computer program when executed by a processor implements the method according to any one of claims 1 to 8, the method according to claim 9 or 10, or the method according to claim 11.

14. A computer program product, wherein:
the computer program product when being executed implements the method according to any one of claims 1 to 8, the method according to claim 9 or 10, or the method according to claim 11.

## Patentansprüche

1. Verfahren zur Kommunikation, das von einem Stromsteuerübertragungsprotokoll(SCTP)-Proxygateway ausführbar ist, wobei das Verfahren Folgendes umfasst:
Aufbauen (S410) einer Verbindung unter einem SCTP mit einer Basisstationsvorrichtung in Reaktion auf eine SCTP-Verbindungsanforderung, die von der Basisstationsvorrichtung übertragen wurde;
nach Aufbauen der Verbindung mit der Basisstationsvorrichtung,
Empfangen (S420) einer Anforderung zum Aufbauen eines Dienstes, die von der Basisstationsvorrichtung über die Verbindung übertragen wird, und
Kapseln (S420) von Anforderungsdaten, die in der Anforderung umfasst sind, zum Aufbauen des Dienstes als eine Anforderungsnachricht;
Bestimmen (S430) einer Zugangs- und Mobilitätsverwaltungsfunktions(AMF)-Netzwerkadresse durch Parsen eines vorausgelegten AMF-Domänennamens;
Übertragen (S430) der Anforderungsnachricht zu einer Ziel-AMF, die der AMF-Netzwerkadresse entspricht;
Kapseln (S440) einer Antwortnachricht, die von der Ziel-AMF für die Anforderungsnachricht zurückgegeben wird, durch das SCTP, um eine Antwort zu erhalten; und
Übertragen (S440) der Antwort zur Basisstationsvorrichtung.

2. Verfahren nach Anspruch 1, wobei das Bestimmen der AMF-Netzwerkadresse durch Parsen des vorausgelegten AMF-Domänennamens Folgendes umfasst:
Erzeugen einer Domänennamensystems (DNS) -Abfrageanforderung für den vorausgelegten AMF-Domänennamen;
Übertragen der DNS-Abfrageanforderung zu einem DNS-Lastausgleichsgateway, um dem DNS-Lastausgleichsgateway Folgendes zu ermöglichen: Zuteilen der AMF-Netzwerkadresse in Reaktion auf die DNS-Abfrageanforderung; und
Empfangen einer DNS-Abfrageantwort, die vom DNS-Lastausgleichsgateway zurückgegeben wird, um die AMF-Netzwerkadresse von der DNS-Abfrageantwort zu erhalten.

3. Verfahren nach Anspruch 1, wobei:
das Übertragen der Anforderungsnachricht zur Ziel-AMF, die der AMF-Netzwerkadresse entspricht, Folgendes umfasst:
Übertragen der Anforderungsnachricht zu einem AMF-Lastausgleicher, der der AMF-Netzwerkadresse entspricht, um dem AMF-Lastausgleicher Folgendes zu ermöglichen: Zuteilen der Anforderungsnachricht zu einer benannten AMF-Instanz zum Verarbeiten der Anforderungsnachricht, wobei die benannte AMF-Instanz die Ziel-AMF ist; und
das Verfahren ferner Folgendes umfasst:
Empfangen der Antwortnachricht, die von der spezifizierten AMF-Instanz für die Anforderungsnachricht zurückgegeben wird.

4. Verfahren nach Anspruch 1, wobei das Verfahren nach dem Aufbauen der Verbindung mit der Basisstationsvorrichtung ferner Folgendes umfasst:
Empfangen einer Anforderung zum Verarbeiten eines Dienstes, die von der Basisstationsvorrichtung über die Verbindung übertragen wird;
Kapseln von Anforderungsdaten, die in der Anforderung umfasst sind, zum Verarbeiten des Dienstes als eine Dienstverarbeitungsnachricht;
Übertragen der Dienstverarbeitungsnachricht zur Ziel-AMF;
Kapseln einer weiteren Antwortnachricht, die von der Ziel-AMF für die Dienstverarbeitungsnachricht zurückgegeben wird, über das SCTP und
Übertragen der weiteren Antwortnachricht zur Basisstationsvorrichtung.

5. Verfahren nach Anspruch 1, das ferner Folgendes umfasst:
Bestimmen einer weiteren AMF-Netzwerkadresse durch erneutes Parsen des vorausgelegten AMF-Domänennamens in Reaktion auf das Detektieren, dass die Ziel-AMF unnormal ist; und
Antworten auf eine Anforderung zum Verarbeiten eines Dienstes, die von der Basisstationsvorrichtung kommt, gemäß der weiteren AMF-Netzwerkadresse.

6. Verfahren nach Anspruch 1, wobei der vorausgelegte AMF-Domänenname einen global gemeinsam verwendeten AMF-Domänennamen umfasst und die AMF-Netzwerkadresse eine Netzwerkadresse einer AMF in der Nähe der Basisstationsvorrichtung ist.

7. Verfahren nach Anspruch 1, wobei der vorausgelegte AMF-Domänenname einen privaten AMF-Domänennamen umfasst und die AMF-Netzwerkadresse eine Netzwerkadresse einer privaten AMF der Basisstationsvorrichtung ist.

8. Verfahren nach einem der Ansprüche 1 bis 7, wobei das Kapseln der Anforderungsdaten, die in der Anforderung umfasst sind, zum Aufbauen des Dienstes als die Anforderungsnachricht Folgendes umfasst:
Kapseln von Anforderungsdaten, die in der Anforderung umfasst sind, zum Aufbauen des Dienstes als eine Google-Remoteprozeduraufrufnachricht oder
Kapseln von Anforderungsdaten, die in der Anforderung umfasst sind, zum Aufbauen des Dienstes als eine Hypertextübertragungsprotokollnachricht.

9. Verfahren zur Kommunikation, das von einer Basisstationsvorrichtung ausführbar ist, wobei das Verfahren Folgendes umfasst:
Übertragen (S510) einer Stromsteuerübertragungsprotokoll(SCTP)-Verbindungsanforderung zu einem SCTP-Proxygateway, um eine Verbindung unter einem SCTP mit dem SCTP-Proxygateway aufzubauen;
Übertragen (S520) einer Anforderung zum Aufbauen eines Dienstes zum SCTP-Proxygateway über die Verbindung nach dem Aufbauen der Verbindung mit dem SCTP-Proxygateway, um dem SCTP-Proxygateway Folgendes zu ermöglichen:
Kapseln von Anforderungsdaten, die in der Anforderung umfasst sind, zum Aufbauen des Dienstes als eine Anforderungsnachricht und
Übertragen der Anforderungsnachricht zu einer Zielzugangs- und Mobilitätsverwaltungsfunktion, AMF, wobei das SCTP-Proxygateway die Ziel-AMF durch Parsen eines vorausgelegten AMF-Domänennamens bestimmt; und
Empfangen (S530) einer Antwort, die vom SCTP-Proxygateway über die Verbindung zurückgegeben wird, wobei das SCTP-Proxygateway die Antwort durch Kapseln einer Antwortnachricht, die von der Ziel-AMF für die Anforderungsnachricht zurückgegeben wird, über das SCTP erhält.

10. Verfahren nach Anspruch 9, wobei das Übertragen der SCTP-Verbindungsanforderung zum SCTP-Proxygateway Folgendes umfasst:
Übertragen der SCTP-Verbindungsanforderung zum SCTP-Proxygateway gemäß einer vorausgelegten Netzwerkadresse des SCTP-Proxygateways.

11. Verfahren zur Kommunikation, das von einem Domänennamensystems(DNS)-Lastausgleichsgateway ausführbar ist, wobei das Verfahren Folgendes umfasst:
Empfangen (S610) einer DNS-Abfrageanforderung, die von einem Stromsteuerübertragungsprotokoll(SCTP)-Proxygateway übertragen wird, eines vorausgelegten Zugangs- und Mobilitätsverwaltungsfunktions(AMF)-Domänennamens;
Zuteilen (S620) einer AMF-Netzwerkadresse, die dem AMF-Domänennamen entspricht, in Reaktion auf die DNS-Abfrageanforderung;
Erzeugen (S630) einer DNS-Abfrageantwort, die die AMF-Netzwerkadresse anzeigt; und
Übertragen (S630) der DNS-Abfrageantwort zum SCTP-Proxygateway, um dem SCTP-Proxygateway Folgendes zu ermöglichen:
Kapseln von Anforderungsdaten, die in einer Anforderung umfasst sind, zum Aufbauen eines Dienstes, die von einer Basisstationsvorrichtung über eine Verbindung unter einem SCTP übertragen wird, als eine Anforderungsnachricht und
Übertragen der Anforderungsnachricht zu einer Ziel-AMF, die der AMF-Netzwerkadresse entspricht.

12. Einrichtung zur Kommunikation, die auf einem Stromsteuerübertragungsprotokoll (SCTP)-Proxygateway eingesetzt wird, wobei die Einrichtung Folgendes umfasst:
eine erste Aufbaueinheit (802), die dazu ausgelegt ist, in Reaktion auf eine Stromsteuerübertragungsprotokoll(SCTP)-Verbindungsanforderung, die von einer Basisstationsvorrichtung übertragen wird, eine Verbindung unter einem SCTP mit der Basisstationsvorrichtung aufzubauen;
eine erste Empfangseinheit (804), die dazu ausgelegt ist, eine Anforderung zum Aufbauen eines Dienstes zu empfangen, der von der Basisstationsvorrichtung über die Verbindung übertragen wird, und Anforderungsdaten, die in der Anforderung umfasst sind, zum Aufbauen des Dienstes als eine Anforderungsnachricht zu kapseln, nachdem die Verbindung mit der Basisstationsvorrichtung aufgebaut wurde;
eine Verarbeitungseinheit (806), die dazu ausgelegt ist, durch Parsen eines vorausgelegten AMF-Domänennamens eine Zugangs- und Mobilitätsverwaltungsfunktions(AMF)-Netzwerkadresse zu bestimmen und die Anforderungsnachricht zu einer Ziel-AMF zu übertragen, die der AMF-Netzwerkadresse entspricht; und
eine erste Übertragungseinheit (808), die dazu ausgelegt ist, eine Antwortnachricht, die von der Ziel-AMF für die Anforderungsnachricht zurückgegeben wird, über das SCTP zu kapseln und die Antwort zur Basisstationsvorrichtung zu übertragen.

13. Computerlesbares Medium, auf dem ein Computerprogramm gespeichert ist, wobei:
das Computerprogramm, wenn es von einem Prozessor ausgeführt wird, das Verfahren nach einem der Ansprüche 1 bis 8, das Verfahren nach Anspruch 9 oder 10 oder das Verfahren nach Anspruch 11 implementiert.

14. Computerprogrammprodukt, wobei:
das Computerprogrammprodukt, wenn es ausgeführt wird, das Verfahren nach einem der Ansprüche 1 bis 8, das Verfahren nach Anspruch 9 oder 10 oder das Verfahren nach Anspruch 11 implementiert.

## Revendications

1. Procédé de communication exécutable par une passerelle mandataire de protocole de transmission de contrôle de flux, SCTP, dans lequel le procédé comprend les étapes suivantes :
établir (S410) une connexion sous un SCTP avec un dispositif de station de base en réponse à une demande de connexion SCTP transmise par le dispositif de station de base ;
après avoir établi la connexion avec le dispositif de station de base,
recevoir (S420) une demande qui concerne l'établissement d'un service et qui est transmise par le dispositif de station de base via la connexion, et
encapsuler (S420) des données de demande comprises dans la demande pour établir le service sous la forme d'un message de demande ;
déterminer (S430) une adresse réseau de fonction de gestion d'accès et de mobilité, AMF, par analyse syntaxique d'un nom de domaine AMF préconfiguré ;
transmettre (S430) le message de demande à une AMF cible correspondant à l'adresse réseau AMF ;
encapsuler (S440) un message de réponse qui est renvoyé par l'AMF cible pour le message de demande via le SCTP pour obtenir une réponse ; et
transmettre (S440) la réponse au dispositif de station de base.

2. Procédé selon la revendication 1, dans lequel le fait de déterminer l'adresse réseau AMF par analyse syntaxique du nom de domaine AMF préconfiguré comprend ce qui suit :
générer une demande de requête de système de noms de domaine, DNS, pour le nom de domaine AMF préconfiguré ;
transmettre la demande de requête DNS à une passerelle d'équilibrage de charge DNS pour permettre à la passerelle d'équilibrage de charge DNS : d'allouer l'adresse réseau AMF en réponse à la demande de requête DNS ; et
recevoir une réponse à la requête DNS qui est renvoyée par la passerelle d'équilibrage de charge DNS pour obtenir l'adresse réseau AMF à partir de la réponse à la requête DNS.

3. Procédé selon la revendication 1, dans lequel :
le fait de transmettre le message de demande à l'AMF cible correspondant à l'adresse réseau AMF comprend ce qui suit :
transmettre le message de demande à un équilibreur de charge AMF correspondant à l'adresse réseau AMF pour permettre à l'équilibreur de charge AMF : d'allouer le message de demande à une instance AMF désignée pour traiter le message de demande, dans lequel l'instance AMF désignée est l'AMF cible ; et
le procédé comprend en outre l'étape suivante :
recevoir le message de réponse qui est renvoyé par l'instance AMF spécifiée pour le message de demande.

4. Procédé selon la revendication 1, dans lequel, après avoir établi la connexion avec le dispositif de station de base, le procédé comprend en outre les étapes suivantes :
recevoir une demande qui est destinée à traiter un service et qui est transmise par le dispositif de station de base via la connexion ;
encapsuler des données de demande comprises dans la demande pour traiter le service sous la forme d'un message de traitement de service ;
transmettre le message de traitement de service à l'AMF cible ;
encapsuler un autre message de réponse qui est renvoyé par l'AMF cible pour le message de traitement de service via le SCTP ; et
transmettre l'autre message de réponse au dispositif de station de base.

5. Procédé selon la revendication 1, comprenant en outre les étapes suivantes :
déterminer un autre adresse réseau AMF par une nouvelle analyse syntaxique du nom de domaine AMF préconfiguré en réponse à la détection d'une anomalie de l'AMF cible ; et
répondre à une demande qui est destinée à traiter un service et qui provient du dispositif de station de base selon l'autre adresse réseau AMF.

6. Procédé selon la revendication 1, dans lequel le nom de domaine AMF préconfiguré comprend un nom de domaine AMF mondial partagé, et l'adresse réseau AMF est une adresse réseau d'une AMF à proximité du dispositif de station de base.

7. Procédé selon la revendication 1, dans lequel le nom de domaine AMF préconfiguré comprend un nom de domaine AMF privé, et l'adresse réseau AMF est une adresse réseau d'une AMF privée du dispositif de station de base.

8. Procédé selon l'une des revendications 1 à 7, dans lequel le fait d'encapsuler les données de demande comprises dans la demande pour établir le service sous la forme du message de demande comprend ce qui suit :
encapsuler les données de demande comprises dans la demande pour établir le service sous la forme d'un message d'appel de procédure à distance Google, ou
encapsuler les données de demande comprises dans la demande pour établir le service sous la forme d'un message de protocole de transfert hypertexte.

9. Procédé de communication exécutable par un dispositif de station de base, dans lequel le procédé comprend les étapes suivantes :
transmettre (S510) une demande de connexion de protocole de transmission de contrôle de flux, SCTP, à une passerelle mandataire SCTP pour établir une connexion sous un SCTP avec la passerelle mandataire SCTP ;
transmettre (S520) à la passerelle mandataire SCTP une demande pour établir un service via la connexion après avoir établi la connexion avec la passerelle mandataire SCTP, pour permettre à la passerelle mandataire SCTP :
d'encapsuler des données de demande comprises dans la demande pour établir le service sous la forme d'un message de demande ; et
de transmettre le message de demande à une fonction de gestion d'accès et de mobilité, AMF, cible, dans lequel la passerelle mandataire SCTP détermine l'AMF cible par analyse syntaxique d'un nom de domaine AMF préconfiguré ; et
de recevoir (S530) une réponse qui est renvoyée par la passerelle mandataire SCTP via la connexion, dans lequel la passerelle mandataire SCTP obtient la réponse en encapsulant un message de réponse qui est renvoyé par l'AMF cible pour le message de demande via le SCTP.

10. Procédé selon la revendication 9, dans lequel le fait de transmettre la demande de connexion SCTP à la passerelle mandataire SCTP comprend ce qui suit :
transmettre la demande de connexion SCTP à la passerelle mandataire SCTP selon une adresse réseau préconfigurée du passerelle mandataire SCTP.

11. Procédé de communication exécutable par une passerelle d'équilibrage de charge de système de noms de domaine, DNS, dans lequel le procédé comprend les étapes suivantes :
recevoir (S610) une demande de requête DNS qui est transmise par une passerelle mandataire de protocole de transmission de contrôle de flux, SCTP, pour un nom de domaine de fonction de gestion d'accès et de mobilité, AMF, préconfiguré ;
allouer (S620) une adresse réseau AMF correspondant au nom de domaine AMF en réponse à la demande de requête DNS ;
générer (S630) une réponse à la requête DNS indiquant l'adresse réseau AMF ; et
transmettre (S630) la réponse à la requête DNS à la passerelle mandataire SCTP, pour permettre à la passerelle mandataire SCTP :
d'encapsuler des données de demande comprises dans une demande qui concerne l'établissement d'un service et qui est transmise par un dispositif de station de base via une connexion sous un SCTP, sous la forme d'un message de demande ; et
de transmettre le message de demande à une AMF cible correspondant à l'adresse réseau AMF.

12. Appareil de communication déployé sur une passerelle mandataire de protocole de transmission de contrôle de flux, SCTP, dans lequel l'appareil comprend :
une première unité d'établissement (802), configurée pour établir une connexion sous un protocole de transmission de contrôle de flux, SCTP, avec un dispositif de station de base en réponse à une demande de connexion SCTP transmise par le dispositif de station de base ;
une première unité de réception (804), configurée pour recevoir une demande qui concerne l'établissement d'un service et qui est transmise par le dispositif de station de base via la connexion, et encapsuler des données de demande comprises dans la demande pour établir le service sous la forme d'un message de demande, après l'établissement de la connexion avec le dispositif de station de base ;
une unité de traitement (806), configurée pour déterminer une adresse réseau de fonction de gestion d'accès et de mobilité, AMF, par analyse syntaxique d'un nom de domaine AMF préconfiguré, et transmettre le message de demande à une AMF cible correspondant à l'adresse réseau AMF ; et
une première unité de transmission (808), configurée pour encapsuler un message de réponse qui est renvoyé par l'AMF cible pour le message de demande via le SCTP pour obtenir une réponse, et transmettre la réponse au dispositif de station de base.

13. Support lisible par ordinateur, stockant un programme informatique, dans lequel :
le programme informatique, lorsqu'il est exécuté par un processeur, met en œuvre le procédé selon l'une des revendications 1 à 8, le procédé selon la revendication 9 ou 10, ou le procédé selon la revendication 11.

14. Produit de programme informatique, dans lequel :
le produit de programme informatique, lorsqu'il est exécuté, met en œuvre le procédé selon l'une des revendications 1 à 8, le procédé selon la revendication 9 ou 10, ou le procédé selon la revendication 11.
